(19) **Europäisches Patentamt**
**European Patent Office**
**Office européen des brevets**

(11) **EP 2 983 084 A1**

(12) **EUROPEAN PATENT APPLICATION**

(43) Date of publication:
**10.02.2016 Bulletin 2016/06**

(51) Int Cl.:
**G06F 9/44** (2006.01)        **G06F 11/36** (2006.01)
**G06Q 10/06** (2012.01)

(21) Application number: **14306238.8**

(22) Date of filing: **05.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
• **Beauvais, Mathieu**
**91620 Nozay (FR)**

• **Turkiewicz, Pierre**
**91620 Nozay (FR)**

(74) Representative: **Loyer & Abello**
**9, rue Anatole de la Forge**
**75017 Paris (FR)**

Remarks:
Amended claims in accordance with Rule 137(2) EPC.

(54) **Device for ranking software code sections to be reviewed for errors**

(57)     The disclosure provides a device (10) for ranking software code sections to be reviewed for errors, comprising
an input interface for receiving the software code sections to be ranked, and one or more data repository (7,8) in which are stored a first list of potential modalities, and a second list of numerical weights, each numerical weight being associated to at least one potential modality of the first list and representing a numerical contribution of the at least one modality of the first list to a level of defects function,
a utility calculator component (3) configured to calculate the level of defects function for the software code section, as a function of the actual modalities of the software code section and of the numerical weights associated, and
a recommender component (4) configured to rank the software code sections as a function of the level of defects function.

FIG.1

EP 2 983 084 A1

**Description**

**Field**

This disclosure relates to the technical field of software code inspection tools.

**Background**

To guarantee software quality and development cost, best practices from Lean, Agile and other quality methods recommend performing a review of software code sections. This review, also referred to as inspection, is a planned step in the overall software code development timeline, where the authors of a software code and peers evaluate the software code sections for correctness and completeness. For the sake of generality, a software code section refers to any piece of software code, e.g. provided as source code of compiled code. A review of a software code section is a success if defects are removed from the software code section. The only way to fail a review is to miss defects in a set of software code sections and as a consequence pass these defects downstream.

Three main actors are to be considered in the review process. The first one is the author, who is the creator of the software code section under inspection. The second one is the reviewer who inspects the software code section that is under inspection. The third one is the manager of inspection, also referred as the moderator. This last one should not be the author but could be a reviewer of the code. A set of software code sections may have been created by a plurality of authors and may be reviewed by a plurality of reviewers.

Two main best practices concern which and how many software code sections are selected to go through the process of review. In the first practice, the author of a set of software code sections is to determine which software code section of the set has to be reviewed. In the second practice, as for example in Agile methodology, a user scenario to be tested is defined. From the user scenario, the moderator and the authors are able to determine which software code sections are involved in this scenario and thus which software code sections have to be reviewed.

These practices use a performance indicator. This performance indicator is the number of software code sections that have been reviewed over the total number of software code sections that are to review, as a percentage. This performance indicator leads the moderators to target a 100% coverage of software code section review. For example, for the second practice, 100% of the software code sections involved in the defined user scenario have to be reviewed. This performance indicator does not guarantee that the smallest possible number of reviews has been performed in a set of software code sections to be reviewed to obtain the maximum precision about the number of defects in the software. Some software tools as Collaborator or Gemini offer to identify easily which software code section has never been inspected and easily communicate about a given software code section between authors and/or reviewers.

Another aspect is that these tools suggest good practices such as an optimal size for reviews. For example, for the review of a software code section, a good practice is to provide, for a review step: 3 participant reviewers, each reviewing a version of 15 files of software code sections, 2 overall defects, 5 file defects, 30 file conversations and 8 comments per conversation.

This notion of "optimal size" of review does not define how the software code section to be reviewed is selected but how the software code section should be reviewed and what the expected results are. This best practice is not good enough because the expected results from software Code section review are only a best guess. Indeed, the expected results are not based on the reality of one given team of authors and/or reviewers creating a given software code. Moreover this "optimal size" notion does not define or help neither to define which software code section has to be reviewed nor which software code section is important for the company or what is the minimum number of software code section review to be performed to be confident in the lack of defects in the code.

**Summary**

In an embodiment, the disclosure provides a device for ranking software code sections to be reviewed for errors, wherein the device comprises:

an input interface for receiving the software code sections to be ranked,
one or more data repository in which are stored
a first list of potential modalities that represent attributes of software, each modality being a value of the attribute of software, and
a second list of numerical weights, each numerical weight being associated to at least one potential modality of the first list and representing a numerical contribution of the at least one modality of the first list to a level of defects function,
a code characteristic manager component configured to determine the actual modalities of a software code section received by the input interface,

a utility calculator component configured to perform the step of calculating the level of defects function for the software code section, as a function of the actual modalities of the software code section and of the numerical weights associated to the actual modalities of the software code section, and

a recommender component configured to perform the step of ranking the software code sections as a function of the level of defects function,

the device further comprising one or more output interface for transmitting a ranked list of the software code sections.

According to embodiments, such a device can comprise one or more of the features below.

In embodiments, the device further comprises a modeler component having a data repository in which is stored a plurality of software code sections for modeling, each software code section having an n-tuple of modalities representing attributes of the software code section, the modeler component further comprising

a modeler calculator component configured to perform the step of applying a design of experiment algorithm to the first list of potential modalities, in order to generate a matrix having a plurality of rows, each row comprising an n-tuple of modalities, wherein each modality of the n-tuple represents a respective attribute of software, wherein a column of the matrix comprises the modalities of a unique attribute of software,

the modeler component further comprising a score memory component for storing a list of level of defect values, each level of defect value being the result of a quantitative assessment of a software code section for modeling that matches the n-tuple of modalities defined by a rank of the matrix,

the modeler calculator component being further configured to perform the step of calculating the second list as a function of the list of level of defect values and of the matrix.

In embodiments, the calculation of the second list as a function of the list of level of defect values and of the matrix is performed as follows: $\vec{B} = (\tilde{A}.A)^{-1}.(\tilde{A}.\vec{Y})$, wherein B is the second list, A is the matrix, Y is the list of level of defect values and $\tilde{A}$ represents the transpose of the matrix A.

In embodiments, the algorithm used for performing the design of experiment is Box-Behnken plan or AlgDesign R package.

In embodiments, the device further comprises a selection module configured to perform the step of calculating an algorithm suitability, wherein the algorithm suitability is defined as the difference between the level of defects function applied to an n-tuple of modalities and the corresponding level of defect value stored in the score memory component.

In embodiments, the data repository further comprises a set of design of experiment algorithms,

the selection module is further configured to perform the step of selecting by an iterative selection method an algorithm belonging to the set of design of experiment algorithms,

wherein the iterative selection method comprises applying each design of experiment algorithm by the modeler component to the first list of potential modalities for calculating the level of defects function for the software code sections,

the iterative selection method further comprises calculating, by the selection module, the algorithm suitability for each design of experiment algorithm,

the iterative selection method further comprises ranking, by the selection module, the design of experiment algorithms as a function of each algorithm suitability, from the lowest algorithm suitability to the highest algorithm suitability,

the iterative selection method further comprises the selection, in the ranked design of experiment algorithms, of the first ranked algorithm for applying by the modeler calculator component.

In embodiments, the modeler component is further configured to perform the step of optimizing by an iterative method the design of experiment algorithm, by excluding from the calculation of the matrix the potential combination of modalities that do not match the exhaustive combination of modalities of the software code sections for modeling stored in the data repository.

In embodiments, the attributes of software have quantitative and/or qualitative and/or continuous modalities.

In embodiments, the attributes of software comprise an author attribute characterizing the name of the author of a software code section.

In embodiments, the attributes comprise an attribute selected in the following list: list of authors who contributed to creation or modification, date of modification, frequency of modification, java package, java package tree, most important design pattern used, price paid, number of lines of the software code section, number of different authors having contributed to the software code section, creation or modification, number of countries from which the authors who contributed to creation of the software code sections originate, number of countries from which the authors who contributed to modification of the software code sections originate, list of countries from which the authors who contributed to creation of the software code sections originate, list of countries from which the authors who contributed to modification of the software code sections originate, last country from which the authors who contributed to creation of the software code sections originate, last country from which the authors who contributed to modification of the software code sections originate, number of external libraries used to create and/or modify the software code sections, number of include and/or import used to create and/or modify the software code sections, number of copy/paste performed from other software code sections to create and/or modify the software code sections, size of copy/paste performed from other software code sections to create and/or modify the software code sections, number of code review performed on the software code sections, frequency of code review performed on the software code sections.

In embodiments, the utility calculator component is further configured to perform a selection of a software code section as a function of the rank of the software code section.

In embodiments, the second list comprises a numerical weight associated to a plurality of modalities of the first list and representing a numerical contribution of an interaction between the plurality of modalities to the level of defects function.

In embodiments, the one or more data repository of the device further stores a list of potential reviewers,

wherein the utility calculator component is further configured for ranking the list of potential reviewers for a selected software code section,
the modeler component being configured for,
for each reviewer of the list of potential reviewers,
selecting, from the score memory component and the one or more data repository, a subset of the n-tuples of modalities of the software code sections stored in the data repository for which the matching level of defect value is the result of a quantitative assessment attributed by the reviewer, each modality of the n-tuple of modalities being stored in the first list,
applying, by the modeler calculator component, a design of experiment algorithm to the subset of the n-tuples of modalities, in order to generate a reviewer matrix
having a plurality of rows, each row comprising an n-tuple of modalities of the subset,
calculating, by the modeler calculator component, a reviewer second list of numerical weights as a function of the matching level of defect values and of the reviewer matrix,
the utility calculator component being further configured to perform the calculation of a reviewer's defect detection capability function, as a function of the actual modalities of the selected software code section and of the numerical weights of the reviewer second list that are associated to the actual modalities of the selected software code section,
wherein the reviewer's defect detection capability function represents the reviewer detection capability of defects associated to the selected software code section,
the recommender component being further configured to perform the steps of:

- ranking, for the selected software code section, the reviewers of the list of potential reviewers as a function of the reviewer's defect detection capability function,
- transmitting, via an output interface, the ranked list of potential reviewers associated to the selected software code section.

In embodiments, the device further comprises a selection interface for selecting the software code section to review.

In an embodiment, the disclosure provides a computer-implemented method for ranking software code sections to be reviewed for errors, wherein a first list of potential modalities represent attributes of software, each modality being a value of the attribute of software, and
a second list of numerical weights represent a numerical contribution of the at least one modality of the first list to a level of defects function, each numerical weight being associated to at least one potential modality of the first list,
the method comprising the steps of:

- receiving the software code sections to be ranked,
- determining the actual modalities of a software code section received,
- calculating the level of defects function for the software code section, as a function of the actual modalities of the software code section and of the numerical weights associated to the actual modalities of the software code section,
- ranking the software code sections as a function of the level of defects function, and
- transmitting a ranked list of the software code sections.

In embodiment, each software code section of a plurality of software code sections for modeling has an n-tuple of modalities representing attributes of the software code section, the method further comprising

applying a design of experiment algorithm to the first list of potential modalities, in order to generate a matrix (A) having a plurality of rows, each row comprising an n-tuple of modalities, wherein each modality of the n-tuple represents a respective attribute of software, wherein a column of the matrix comprises the modalities of a unique attribute of software, calculating the second list (B) as a function of a list of level of defect values (Y) and of the matrix, wherein each level of defect value of the list of level of defect values(Y) is the result of a quantitative assessment (23) of a software code section for modeling that matches the n-tuple of modalities defined by a rank of the matrix, the method further comprising the ranking of a list of potential reviewers for a selected software code section, by:

- selecting a subset of the n-tuples of modalities of the software code sections for which the matching level of defect value is the result of a quantitative assessment attributed by the reviewer, each modality of the n-tuple of modalities being stored in the first list,
- applying a design of experiment algorithm to the subset of the n-tuples of modalities, in order to generate a reviewer matrix having a plurality of rows, each row comprising an n-tuple of modalities of the subset,
- calculating, by the modeler calculator component, a reviewer second list of numerical weights as a function of the matching level of defect values and of the reviewer matrix,
- performing the calculation of a reviewer's defect detection capability function, as a function of the actual modalities of the selected software code section and of the numerical weights of the reviewer second list that are associated to the actual modalities of the selected software code section, wherein the reviewer's defect detection capability function represents the reviewer detection capability of defects associated to the selected software code section,
- ranking, for the selected software code section, the reviewers of the list of potential reviewers as a function of the reviewer's defect detection capability function,
- transmitting the ranked list of potential reviewers associated to the selected software code section.

According to embodiments, such a method may further comprise one or more steps performed by the device according to any of claim 1 to 14.

Aspects of the disclosure are based on the idea of introducing in the Code Inspection System a "Code inspection recommender" that optimizes the planning of Code Inspection.

Aspects of the disclosure are based on the idea of reducing the number of code inspections needed to fully identify the level of defects function of a software code section to only a subset of all the possible code inspections.

Aspects of the disclosure stem for the observation that the resources (people, time, enthusiasm...) for code inspection can be scarce.

Aspects of the disclosure are based on the idea of selecting which classes are to be inspected in priority compared to other classes.

Aspects of the disclosure are based on the idea of selecting which reviewers are to be selected for each class in priority compared to other reviewers.

This disclosure has several unique benefits:

1. Performance: this disclosure improves the performance of the software code review step by giving insight to the moderators in charge of planning the code reviews

2. Customization: the software code review activity can be tailored to the specific need of one organization as for example profiles and availability of reviewers, quality of the code produced by authors etc

3. Maximizing the chance to find defects by defining an ordered list of code to be reviewed. When the resources (reviewers, reviewers motivation, time) are scare, this disclosure helps to remove the most important defects compared to an approach based on a random selection of code to be reviewed.

4. Cost reduction: this disclosure helps the customers to reduce the costs associated to the development of software. When more defects are found at early stage thanks to this disclosure, less manpower is used to test and get a software working correctly.

5. Risk reduction: by removing more defects at an early stage, many risks are lower. For example, the following risks are lowered: the risk to be late for the go to market, the risk about cost or the risk to discover a major failure at client level.

6. Convenience: by maximizing the chance to discover defects for each reviewers, it becomes more easy for moderators to plan code inspection. This disclosure creates a positive loop about code inspection for code reviewers. The reviewers have the feeling to perform a useful code inspection.

**Brief description of the drawings**

These and other aspects of the disclosure will be apparent from and elucidated with reference to the embodiments described hereinafter, by way of example, with reference to the drawings.

Figure 1 is a functional drawing of a device for ranking software code sections to be reviewed for errors
Figure 2 is a flow chart showing a method to define a level of defects function performed by the device of Figure 1
Figure 3 is a bar graph showing the difference of the number of software code sections to be reviewed in order to detect a defect which is of a targeted level for a set of software code sections.

**Detailed description of the embodiments**

As described above, the present disclosure provides a device for ranking software code sections to be reviewed for errors, in order to optimizing the planning of the review step in a software code development. The device identifies the minimum number of modified software code sections to be planned for review, in order to reach a target level of defects. For example, for a software code section, one possible range for the level of defects could be defined from no errors reported to major errors reported.

Furthermore, the device is able to adapt the software code section review planning to the available reviewers. Indeed, the device is able to propose a selection of adequate reviewers for each modified software code section to be planned for review. Hence, the device makes it easy to split the review work between the available reviewers on the basis of their ability to perform a review on a given software code section.

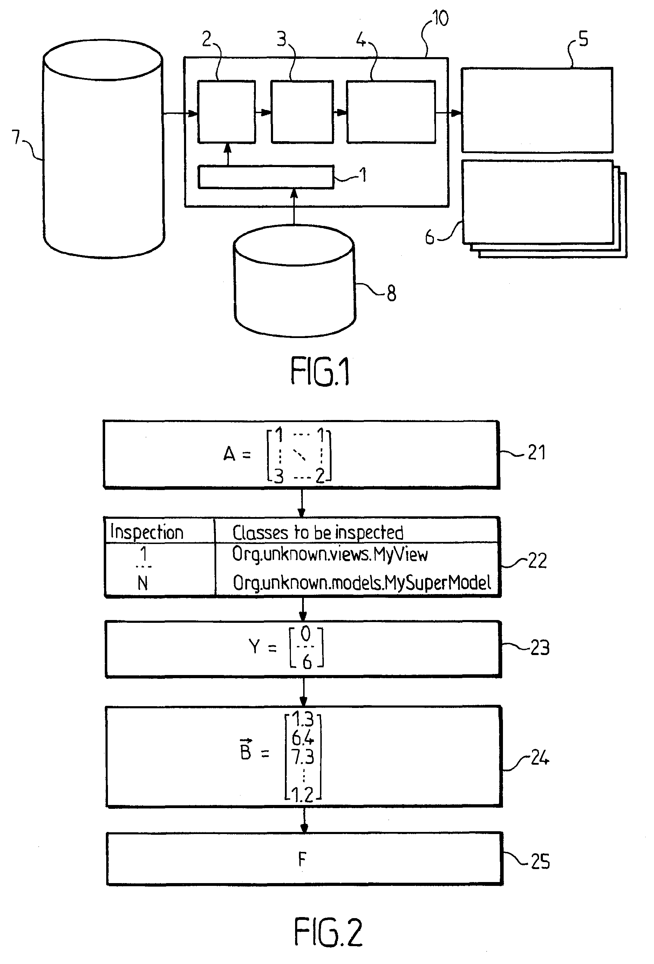

With reference to figure 1, a device 10 for ranking software code sections to be reviewed for errors will be described. The device 10 has an input interface for receiving from data repositories 7, 8 a input set of software code sections to be reviewed and level of defects associated to some characteristics of software code sections. The device also has an output interface for returning an ordered list 5 of some software code sections of the input set of software code sections. The output interface returns as well an ordered list 6 of reviewers adapted to review a software code section of the ordered list 5 of software code sections.

The device 10 comprises several components:

- a code characteristics manager component 1, which is configured to identify the characteristics of software code sections to be inspected. The software code sections to be inspected are downloaded by the code characteristics manager component 1 from the data repository 8.
- a modeler component 2, which is configured to use the characteristics identified in order to produce a level of defects function. The level of defects function is a function that takes a software code section of a set of software code section as an input and returns a level of defect attributed to the software code section as an output. The level of defect is calculated as a function of the characteristics of the software code section and as a function of level of defects associated to some characteristics of software code sections from data repositories 7.
- a utility calculator component 3, which is configured to generate an ordered list of combination of characteristics as a function of the expected level of defects of the software code sections having these combination of characteristics. The expected level of defects is calculated thanks to the level of defects function.
- a recommender component 4, which is configured to generate an ordered list 5 of software code sections to be reviewed as a function of the rank of their corresponding combination of characteristics. The recommender component 4 is also able to generate an ordered list of reviewers 6 for each software code sections to be reviewed or for each combination of characteristics.

The functions of each of the components of the device 10 will be below described more in detail.

Characteristics are made of attributes that can have several values, also referred as modalities. The code characteristics component 1 is configured to consider different software code sections of a provided set of software code sections to be reviewed and identifies the values for each attributes. Software code sections can have varying definitions depending on the coding language used, overall program structure, coding practices, quality policies, etc... For example, software code sections can be defined as smallest testable and/or reviewable part of the code, individual functions or procedures, modules, interfaces, classes, methods, etc... The moderators may select which code characteristics are relevant for code inspection according to their business and/or quality policy.

With reference to figure 2, the method performed by the modeler component 2 will be described. The modeler component 2 is configured to perform steps 21 to 25 in order to produce a level of defects function.

In a first step 21, the modeler component 2 performs a design of experiment. To perform a design of experiment, the modeler component 2 relies on the attributes selected by the code characteristics component 1, and uses a design of experiment algorithm in order to identify a level of defects function involving at least one of the set of software code sections characteristics attributes. For example this function may be a linear function of several code characteristics attributes, a quadratic function, a non-linear function, etc. In the first step 21, the parameters of this function not yet determined. The design of experiment algorithm used by the modeler component 2 generates a design of experiment matrix A, consisting in a matrix of values. The values are also referred as modalities. Each row of the matrix corresponds to a n-tuple of modality. Each n-tuple of modalities corresponds to a selection criteria for software code sections planned to be reviewed. The algorithm checks if, for each software code section of the input set of software code sections to be reviewed, a software code section fulfills the characteristics of the n-tuple of modalities. If no software code section can be found for a given n-tuple of modality defined by a row of the matrix A, the modeler component 2 is configured to make an iteration to find the second most optimized design of experiments.

In a second step 22, the modeler component 2 uses the design of experiment matrix A to identify the software code sections to be effectively reviewed from the set of input software code sections to be evaluated.

In a third step 23, levels of defects are obtained for the software code sections that have been identified in the second step 22. The reviewers are thus requested to find defects in the software code section and to qualify the level of defect found for each software code section during each review. The levels of defects are then recorded in a reviewing result matrix Y. A level of defect is a numerical value corresponding to quality evaluation criteria. For example, the level of defect may be related to the cost of the fixing of the errors found in a software code section, or to the cost of the software code maintenance resulting from the errors that have been found, or to the level of impact on overall system of the errors found in a software code section. For example, the highest numerical level of defect value may refer to the lowest quality of the software code section. For example, one possible range for the level of defects could be defined from no errors reported to major errors reported. This range may be defined from 0 to 6, where 0 refers to the level of defect of a software code section for which "no comment" is to be reported, for which 1 refers to "minor comment", 2 refers to "average comment", 3 to "major comment", 4 to "minor defect", 5 to "average defects" and 6 to "major defect". The reviewing result matrix Y may be obtained with historical data relating to older software code sections than those to be currently inspected.

In a forth step 24, the modeler component 2 defines the level of defects function parameters matrix B. The matrix B is derived from a calculation performed by the modeler component 2 implying the matrix A obtained in the first step 21 and the matrix Y obtained in the third step 22. For example, this calculation may comprise a least squares regression. For example, this calculation may comprise an interpolation.

In a fifth step 25, the modeler component 2 uses the function parameters matrix B obtained in the fourth step 24 to define the level of defects function F. The level of defects function F is a function which rely each modality selected by the code characteristics component 1 to a level of defects of the function parameters matrix B.

The above described steps 21 to 25 may be implemented for a whole team of reviewers as well as for a single reviewer.

This level of defects function F is particularly advantageous. Indeed, it permits to anticipate the level of defect of a software code section having an n-tuple of modalities which has never been reviewed.

The modeler component 2 is further configured to define a reviewer's defect detection capability function. The reviewer's defect detection capability function is defined as the level of defects function which results from the level of defects assigned by a single reviewer. To compute this function, steps identical to the steps 21 to 25 are performed, with the difference that the matrix Y is a review result matrix $Y_{name}$ that only includes the results assigned by the single reviewer.

The device 10 comprises a repository 7 of recorded software code sections reviews performed by the given reviewer. A recorded software code sections review comprises an n-tuple of modalities of a software code section and a level of defects associated with the n-tuple of modalities. The level of defects has been attributed by the given reviewer.

The modeler component 2 first follows the step 21 in order to generate a design of experiment matrix $A_{name}$ for the given reviewer. In other words, the modeler component 2 relies on attributes selected by the code characteristics component 1, and uses a design of experiment algorithm.

Then, in the step 22, the modeler component 2 is configured to perform an additional test. Indeed, a set of recorded software code sections review performed by the given reviewer in the repository 7 may either match the design of experiment matrix $A_{name}$ generated by the modeler component 2 for the given reviewer or not.

In the case in which the set matches the generated matrix $A_{name}$, the modeler component 2 is configured to directly generate a single given reviewer's specific review result matrix $Y_{name}$ from the level of defects associated to each recorded software code section stored in repository 7 and matching the matrix $A_{name}$.

In the case in which the set does not match the generated matrix $A_{name}$, the given reviewer should perform in step 23 the lacking software code sections reviews. In other words, the given reviewer should perform the evaluation of a software code section for each n-tuple of modalities of $A_{name}$ that he had not yet qualified. The given reviewer is thus requested to find defects in the software code section and to qualify the level of defects found for the software code section during the review. The levels of defects recorded in the repository 7 and the level of defects found in the lacking reviews are then recorded in the reviewing result matrix $Y_{name}$.

In the step 24, the modeler component 2 is configured to define the reviewer's defect detection capability function $F_{name}$ that applies to the given reviewer from the matrix $Y_{name}$.

With reference to figure 1, the role of the utility calculator component 3 will be described. The utility calculator component 3 is configured to perform the steps of:

- evaluating the expected level of defects of a given software code section thanks to the level of defects function F applied to the n-tuple of modalities of the given software code section.
- evaluating the expected level of defects that could potentially be found by a given reviewer on a given software code section thanks to the reviewer's defect detection capability function $F_{name}$ applied to the n-tuple of modalities of the given software code section. Hence, the utility calculator component 3 is able to estimate the ability of the given reviewer to remove the defects from a specific software code section. This ability is represented as a numeric value, and can be used to select between two reviewers which one is likely to most efficiently review the given software code section.
- evaluating the expected level of defects that could potentially be found by a given reviewer against a given modality. This last evaluation represents the ability of the given reviewer to review each modality of the software code section. The ability is represented as numeric value, and can be used to select between two reviewers which one is likely to most efficiently review the given software code section.

The recommendation component 4 is configured to generate recommendations for code review. The recommendation component 4 uses the utility calculator component 3 to build review recommendations from a set of review data recorded in data repositories 7, 8 such as recently modified software code sections, new software code sections, available reviewers, etc.

For example, the recommendations generated may be any of the following or combination of the following:

- a list 5 of software code sections to be reviewed, ordered by estimated level of defects
- for each software code section to be reviewed from the list 5, a list 6 of recommended reviewers, ordered by estimated level of defects
- for each modality involved in the software code section to be reviewed, a list 6 of recommended reviewers, ordered by estimated level of defects
- for each reviewer, a list 6 of software code sections to be reviewed, ordered by estimated level of defects

The recommendations are transmitted through the output interface of the device 10. The lists can be for example displayed on a screen, or printed, or stored as files in a memory.

For the sake of clarity, an example of application of the general operation of the device 10 that is above described will be described below. In this example of application, the device 10 is a Java code review recommender. For the sake of clarity, this example of application will be referred below as a Java embodiment.

In this java embodiment, examples will be provided at each step of the method for which the Java code review recommender 10 is configured. In this embodiment, the code characteristics manager 1 is a java code characteristics manager wherein the software software code sections are created in Java langage.

For instance, for the Java language, the characteristics may be chosen by the moderators among the following list of attributes and the modalities of these attributes:

- Attribute 1: List of authors (creation or modification)
  o Modalities for attribute 1: Pierre, Nicolas, Ilija...
- Attribute 2: date of modification,
  o Modalities for attribute 2: last week, last month, last year
- Attribute 3: frequency of modification,
  o Modalities for attribute 3: every release, average modification is less than every 4 release, ...
- Attribute 4: java package,
  o Modalities for attribute 4: org.unknown.views.viewl, org.unknown.models.model1, org.unknown.models.model2...
- Attribute 5: java package tree,
  o Modalities for attribute 5: org.unknown.views, org.unknown.models,
  ...
- Attribute 6: most important design pattern used
  o Modalities for attribute 6: scheduler, abstract factory, singleton
- Attribute 7: any other pertinent characteristics of code, for example the number of code lines in the software code section
  o Modalities for attribute 7: less 100 code lines, between 100 to 500 lines, more than 500 lines...
- Attribute 8: a continuous attributes such as Price paid for the coding of the class
- Attribute 9: number of different authors for the same software code section

For each software code section, the code characteristics manager 1 will identify the modalities for each attributes.

Then, the modeler component 2 will generate the level of defects function F and the reviewer's defect detection

capability function $F_{name}$ by following the steps 21 to 25. In step 21, the modeler component 2 performs a design of experiment from the n-tuple of modalities characterizing the software code sections selected by the java code characteristics manager 1. This design of experiment helps to define a linear model to modelize the level of defect of software code sections. This linear model is a function denoted A_Linear_function_general that performs the translation of an n-tuple of modalities denoted code_characteristics into a quantified level of defect denoted Level_of_defects as follows:

Level_of_defects = A_Linear function_general (code_characteristics)

Level_of_defects is a continuous variable on a range, for example from 0 to 6, where 0 stands for "no comments" and 6 stands for "major defects" to be reported for a software code section. code_characteristics is a n-tuple of modalities for the modalities which are defined by the java code characteristic manager 1. For example, the code characteristic manager 1 defines the following modalities for two attributes selected by the moderators to be taken into account for the evaluation of software code sections. The two attributes are selected from the list of attributes and modalities above described as example for the Java language. The first attribute is denoted attribute1 and concerns the characteristic of the author of a software code section, and the second attribute is denoted attribute6 and concerns the characteristic of the most important design pattern used for the creation of the software code section. The modalities concerned for the first attribute are the three names of the three authors of the software code sections: Pierre, Nicolas and Ilija. A modality concerned for the second attribute is the Singleton design pattern. A_Linear_function_general can thus be written as a sum of each of the modalities, each of them being weighted by a numerical value, plus a constant coming from an interpolation as follows.

$$Level\_of\_defects = A\_Linear\_function\_general(code\_characteristics) = 1.3 *$$

$$(attribute1\text{-}Pierre) + 6.4 * (attribute1\text{-}Nicolas) + 7.3 * (attribute1\text{-}Ilija) + 1.2 *$$

$$(attribute6\text{-}Singleton) + 0.8$$

The method perfomed by the device 10 for the calculation of this above introduced function A_Linear_function_general will now be described in this Java embodiment:

As previously explained with reference to the general method, to identify this linear function, the modeler component 2 can either identify a list of n-tuples of modalities to be reviewed on the current version of the set of software code sections to be reviewed or use reviews that have been performed on the previous version of the set of software code sections to be reviewed. In the example of calculation of A_Linear_function_general, the case treated is the first one: the modeler component 2 identifies the linear function from the current version. In the following, the software code sections having a given n-tuple of modalities will be referred as classes.

To identify the list of classes to be inspected on the current version, the modeler component 2 should not use a 2K factorial plan because a full factorial design would mean that the reviews are performed on all the classes. Instead, the modeler component 2 uses an approximate algorithmic design or an optimal design. This plan contains a non-exhaustive list of java classes to review in order to get information on the level of defects of all classes. The approximate algorithmic design or optimal design usable by the modeler component 2 may comprise "blocking", which is the arranging of experimental units in groups that are similar to one other in order to identify "blocks" of reviews. One "block" is a list of classes to be review by one reviewer. The use of blocking allows reviewers to not be overcharged by the review of all the java classes. Instead, each reviewer has only to review a subset of these java classes. A non-exhausting list of algorithms for experiment design that support both variable interaction and blocking comprises Box-Behnken plan or various R package such as AlgDesign R package.

In the step 21 of the method performed by the modeler component 2, this design of experiments algorithm is applied to an exhaustive list of n-tuples of modalities in order to generate a matrix A. This exhaustive list of n-tuples of modalities represents every possible combination of modalities of the set of software code sections to be evaluated. The matrix A comprises a non-exhaustive list of normalized n-tuples of modalities, to define a non-exhaustive list of software code sections from the set to be reviewed in order to evaluate the whole set,.

The matrix A has a plurality of columns denoted j, each column comprising modalities of a unique attribute of software that has been selected by the moderator. The matrix has a plurality of rows denoted i. Each row comprises an n-tuple of modalities representing a combination of modalities characterizing a class.

For the sake of illustration, an example of such a matrix can be written as follow,

$$A = \begin{bmatrix} a11 = 1 & \cdots & a17 = 1 \\ \vdots & \ddots & \vdots \\ an1 = 3 & \cdots & an7 = 2 \end{bmatrix}$$

Wherein the rows are numbered from i= 1 to i=n, and the columns are numbered from j=1 to j=7. In this example, the number of attributes taken in consideration is 7 and the number of n-tuples of modalities to be tested is denoted n.
For example, such a matrix may correspond to the following table.

| Inspection | Attribute1 | ... | Attribute7 |
|---|---|---|---|
| 1 | a11= 1 = Pierre | | a17= 1 = Less_than_100 |
| ... | | | |
| N | an1= 3 = Ilija | ... | an7= 2 = between_100_and_500 |

In this table, the first column denoted "inspection" comprises the number of the n-tuples of modalities to be tested. The second column comprises an attribute, that is the authors of the software code sections. In this table, this attribute may take 3 values representing the name of the author. The first value, also referred as modality, for the attribute of the author, is Pierre. The third value is Ilija. The last column comprises another attribute, that is the number of code lines in the software code section, taking two modalities defined by of a number of code lines lower or higher than a threshold of 100 lines.
In this example, the attributes are for Attribute1 a qualitative attribute whereas Attribute7 is a quantitative one.
In order to perform further calculations on the matrix A, all the attributes of the matrix A should take quantitative values. Therefore, the qualitative attributes modalities have to be formulated as quantities. For example, the modality "Pierre" is formulated by the value 1 and the modality "Ilija" by the value 3. Explanations to formulate a qualitative value thanks to a quantitative one in experimental design pattern algorithms are given in paragraph 3.3 of
« Plans d'expériences optimaux: un expose didactique » (Jean-Pierre Gauchi, INRA)
Moreover, the quantitative modalities should be normalized in order that the scales of the modalities of different attributes are comparable.
Most of the time the matrix of effects leads to overdetermined systems. Therefore, in order to calculate the constant, 0.8 in this example, for the linear model, a first column comprising ones is added to the first matrix A. Therefore, the matrix A is transformed to

$$A = \begin{bmatrix} 1 & a11 = 1 & \cdots & a17 = 1 \\ \dots & \vdots & \ddots & \vdots \\ 1 & an1 = 3 & \cdots & an7 = 2 \end{bmatrix}$$

The value of the design of experiment algorithm resides in the fact that only a subset of all the possible code review are to perform in order to identify the function A_Linear_function_general in step 25 of the method performed by the modeler component 2. Usually but not limitatively, N corresponds to only 20% of all the possible n-tuple of modalities.
In the step 22, the modeler component 2 performs the identification of which classes must be reviewed from the matrix A obtained in the step 21. A list of classes to be inspected is generated as for example in the following table:

| Inspection | Classes to be inspected |
|---|---|
| 1 | Org.unknown.views.MyView |
| ... | |
| N | Org.unknown.models.MySuperModel |

In the step 23, this list is presented to the reviewers that will perform the code review on these classes and attribute a level of defect to each. In this example, the decision is to use the current version of the set of software code sections to be reviewed in order to establish the function A_Linear_function_general, so N reviews of the N classes are performed by the reviewers. However, if the decision was to use previous reviews already performed, less than N reviews would be to perform. The results of the software code sections reviews are entered in the device 10 via the data repositories 7 or 8 and the modeler component 2 produces an Inspections result matrix Y from these results. For example, such a matrix Y may be written as follows: $Y = \begin{bmatrix} 0 \\ ... \\ 6 \end{bmatrix}$ from the following table results:

| Inspection | Level of Defects found |
|---|---|
| 1 | 0 (no comment) |
| 2 | 5 (average defects) |
| 3 | 3 (major comment) |
| ... | ... |
| N | 6 (major defect) |

From this matrix Y, the modeler component 2 performs in step 24 the calculation of the level of defect linear function parameters matrix B.

In this step 24, the linear function parameters matrix B is calculated from the following equation:

$$Y = A \cdot B$$

With

$$A = \begin{bmatrix} a11 = 1 & \cdots & a17 = 1 \\ \vdots & \ddots & \vdots \\ an1 = 3 & \cdots & an7 = 2 \end{bmatrix}, \quad Y = \begin{bmatrix} y1 \\ ... \\ yn \end{bmatrix} \text{ and } B = \begin{bmatrix} b1 \\ ... \\ bn \end{bmatrix}$$

To solve this equation, the matrix A should be inversed, and thus be transformed into a square matrix. Therefore, B is found by the modeler component 2 with the resolution of B = (Ã.A)$^{-1}$. (Ã. Y)

The result obtained with this example is $\vec{B} = \begin{bmatrix} 1.3 \\ 6.4 \\ 7.3 \\ \vdots \\ 1.2 \end{bmatrix}$

In the step 25, the modeler component associates each component of the matrix B to a modality. variable of the function A_Linear_function_general by re-inversing the equation:

$$F = A \cdot B$$

$$\begin{bmatrix} f1 \\ ... \\ fn \end{bmatrix} = \begin{bmatrix} a11 & \cdots & a1n = 1 \\ a21 & \ddots & \vdots \\ \vdots & & \\ an1 & \cdots & ann = 2 \end{bmatrix} \cdot \begin{bmatrix} b1 = 1.3 \\ b2 = 6.4 \\ b3 = 7.3 \\ \vdots \vdots \vdots \\ bn = 1.2 \end{bmatrix}$$

Wherein each aij is a coefficient representing a modality and/or an association of modalities.

$$F = \sum_{i=1}^{i=n} f_n = b1 \cdot attribute1 - Pierre + b2 \cdot attribute1 - Nicolas + b3 \cdot$$

= $b1 \cdot$ attribute1 - Pierre + $b2 \cdot$ attribute1 - Nicolas + $b3 \cdot$ attribute1 - Ilija + $bn \cdot$ attribute6 - Singleton + constant

which corresponds in the example used to illustrate this Java embodiment to:

$$F = 1.3 * (attribute1-Pierre) + 6.4 * (attribute1-Nicolas) + 7.3 * (attribute1-Ilija) + 1.2 * (attribute6-Singleton) + 0.8$$

In this example, the value of Pierre being the author of software code section introduces a contribution of b1= 1.3 to the level of defects of the software code section.

As soon as the new linear function is found, all parameters can be evaluated against p-value and R2, that are quality factors that quantifies the quality of the modelization. The modeler component 2 tests, for the design of experiment algorithm, if the modalized level of defect function applies to a software code section gives a good approximation of the experimental level of defect reported by a reviewer..

From the previously identified linear functions, the utility calculator 3 performs the generation of ordered list of the classes that are left to be reviewed.

For example, the following classes have the following characteristics:

| Classes | Attribute1 | ... | Attribute6 |
|---|---|---|---|
| org.unknown.views.OurNewView | Pierre | | Singleton |
| ... | | | |
| org.unknown.models.OurNewModelView | Ilija | ... | Scheduler |

From the level of defects function, the utility calculator 3 calculates the expected level of defects for each class by applying F = 1.3 * (attribute1-Pierre) +6.4 * (attribute1-Nicolas) + 7.3 * (attribute1-Ilija)+ 1.2 * (attribute6-Singleton) + 0.8 to the corresponding n-tuple of modalities.

The following table associating a modelized level of defect for the classes is thus obtained by the utility calculator 3:

| Classes | F : level of defect from the linear model |
|---|---|
| org.unknown.views.OurNewView | 1.3 + 1.2 = 2.5 |
| ... | ... |
| org.unknown.models.OurNewModelView | 7.3 = 7.3 |

The utility calculator 3 makes it possible to determine that, for the class org.unknown.models.OurNewModelView, the associated software code section introduces a defect with level 7.3. This determination is made without having reviewed this class. For the class org.unknown.views.OurNewView, there is a risk that the associated software code section introduces a defect with level 2.5.

Thanks to this table, the recommender component 4 produces a list 5 of classes to be reviewed by priority, ordered by the level of defect calculated by the utility calculator 3. In the previous example, the two classes are ordered as follows:

org.unknown.models.OurNewModelView : 7.3
org.unknown.views.OurNewView: 2.5

In the case where resources (such as reviewers, time, etc...) for code review are scarce, the moderator will have to limit the number of software code section to be review. Thanks to the list 5, the moderator can choose to have the org.unknown.models.OurNewModelView class reviewed but not the org.unknown.views.OurNewView class.

The same example can be used to illustrate, in this Java embodiment, the obtaining of an ordered by affinity list of reviewers for each Java classes to be reviewed. For the obtaining of this list, the steps of the method performed by the modeler component 2 are the same. The differences come from the step 23 wherein the matrix Y will not be a matrix of results of reviews performed by the whole team but by only one reviewer. Therefore, the step 25 will produce a linear model that will only apply to one reviewer such as

$$F\ Pierre = 3.3 * (attribute1\text{-}Ilija) + 1.2 * (attribute6\text{-}Singleton) + 0.3$$

Which shows the ability of Pierre to find defects coming from Ilija and also about singleton design pattern.
This linear model is calculated for each reviewer of the team of reviewers.
For example, the reviewer's defect detection capability function is evaluated for the reviewer Nicolas.

$$F\ Nicolas = 4.3 * (attribute1\text{-}Ilija) + 1.2 * (attribute6\text{-} scheduler) + 0.3$$

From the previously identified linear functions for each reviewer, the utility calculator 3 therefore generates an ordered by affinity list of reviewers, for each java classes that are to be reviewed.
For example, the following classes have the following characteristics

| Classes | Attribute1 | ... | Attribute6 |
|---|---|---|---|
| org.unknown.views.OurNewView | Pierre | | Singleton |
| ... | | | |
| org.unknown.models.OurNewModelView | Ilija | ... | Scheduler |

From the level of defects linear models for each reviewers, the utility calculator 3 calculates the expected level of defects for each class, and for each reviewer for one class:

$$F\ Pierre = 3.3 * (attribute1\text{-}Ilija) + 1.2 * (attribute6\text{-}Singleton) + 0.3$$

$$F\ Nicolas = 4.3 * (attribute1\text{-}Ilija) + 1.2 * (attribute6\text{-} scheduler) + 0.3$$

| Classes | F : level of defect from the linear model |
|---|---|
| org.unknown.views.OurN ewView | $F_{Pierre} = 3.3 * (attribute1\text{-}Ilija) + 1.2 * (attribute6\text{-}Singleton) + 0.3$<br>$F_{Pierre} = 3.3 * 0 + 1.2 * 1 + 0.3 = 1.5$<br><br>$F_{Nicolas} = 4.3 * (attribute1\text{-}Ilija) + 1.2 * (attribute6\text{-}scheduler) + 0.3$<br>$F_{Nicolas} = 4.3 * 0 + 1.2 * 0 + 0.3 = 0.3$ |
| ... | ... |
| org.unknown.models.Ou rNewModelView | $F_{Pierre} = 3.3 * (attribute1\text{-}Ilija) + 1.2 * (attribute6\text{-}Singleton) + 0.3$<br>$F_{Pierre} = 3.3 * 1 + 1.2 * 0 + 0.3 = 3.6$<br><br>$F_{Nicolas} = 4.3 * (attribute1\text{-}Ilija) + 1.2 * (attribute6\text{-}scheduler) + 0.3$<br>$F_{Nicolas} = 4.3 * 1 + 1.2 * 1 + 0.3 = 5.8$ |

Inspecting the org.unknown.views.OurNewView class, Pierre might find a 1.5 defect level whereas Nicolas might find a 0.3 level defect. Inspecting the org.unknown.models.OurNewModelView class, Pierre might find a 3.6 defect level whereas Nicolas might find a 5.8 level defect.
So the ordered list 6 by affinity of reviewers generated by the recommender component 4 is, for the class org.unknown.views.OurNewView:

Pierre

Nicolas

Whereas the ordered list 6 by affinity of reviewers generated by the recommender component 4 is, for the other class org.unknown.views. OurNewModelView:

Nicolas

Pierre

Thanks to these lists 6, the moderator can choose which reviewers should perform a software code section review on a given class. Using the ordered list of reviewers would maximize the chance of success of the software code section review for a given review. Maximizing chance to find defects would make reviewers to have the pleasure thus motivation to perform the software code section inspection.

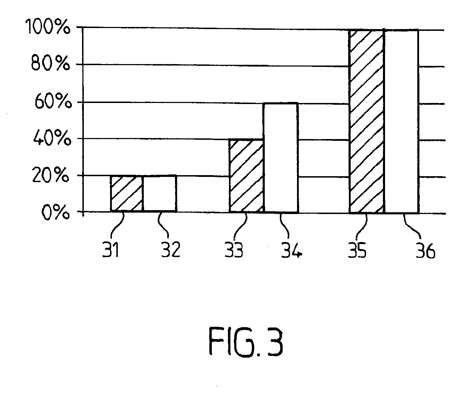

With reference to Figure 3, a bar diagram shows the comparison between the prior art and this disclosure results of percentage of software code sections to be reviewed from a set of software code sections in order to detect defects above a threshold of level of defects for the whole set of software code sections. The lefthand hatched bars 31, 33 and 35 represent the total percentage of software code sections that is necessary to review in order to detect a defect which level is above the threshold in the whole set of software code sections to evaluate. The right-hand bars 32, 34 and 36 represent the total percentage of software code sections that are really reviewed in order to detect a defect which level is above the threshold in the whole set of software code sections to evaluate.

The bars 31 and 32 represent the respective percentage for the modeler component 2 to modelize the level of defects in the step 25. The bars 33 and 34 represent the respective percentage to detect any defect which level is above the threshold, in this example the threshold value is 2. The bars 35 and 36 represent the respective percentage for the prior art practices.

This bar diagram shows that the device 10 helps to diminish the necessary number of software code sections reviewed to detect any defect of level above a given threshold. As shown by the comparison of bars 36 and 34, prior art practices require a 100% percentage of software code section review in order to be sure to detect any defect which level is above the threshold, whereas the present disclosure allows to be sure to detect any defect which level is above the threshold by reviewing only 60% of the software code sections.

In embodiment, the level of defect could also be a list of non-numerical values, each one representing the level of quality for a specific quality consideration.

In embodiment, if former software code sections reviews were performed and recorded in a data repository as repository 7 in association with the reported level of defects, the matrix Y may be constructed by the modeler component 2 directly from the repository 7 and used to calculate the level of defects function F, without the need to perform any further software code section reviews.

In embodiment, the matrix A is defined by rows representing attributes and columns comprising n-tuple of modalities.

In embodiment, the function F comprises cross terms that represents numerical contribution of interactions between two or more modalities of different attributes. For example, such a cross term can be written as follow:

bn* Attribute1-modalityl * attribute6- modality3

For example, bn* Attribute1-modality1 * Attribute6- modality3 = 1.2 * Attribute1-Pierre * Attribute6- Singleton represents that a software code section having both the Pierre and the Singleton modalities will present a numerical contribution of 1.2 to the total level of defect expected for the software code section.

Each component of the device described in this disclosure may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, central processing unit (CPU), digital signal processor (DSP) hardware, network processor, application specific integrated circuit (ASIC), field programmable gate array (FPGA), read-only memory (ROM) for storing software, random access memory (RAM), and nonvolatile storage. Other hardware, conventional and/or custom, may also be included.

The device and each component or group of components of the device described in this disclosure may be implemented in a unitary manner or in a distributed manner.

Each component of the device described hereinabove may comprise interface means, for example a coaxial cable and/or screen and/or a keyboard and/or a mouse and/or a joystick and/or a printer and/or a voice recorder and/or a printer and/or a voice synthetiser and/or a memory data files recorder, to enable a user to read and to write data and to execute instructions in the form of files in the HTML, JAVASCRIPT and/or other language. The interfaces of the device may be implemented in a unitary manner or in a distributed manner.

The disclosure is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A device (10) for ranking software code sections to be reviewed for errors, wherein the device (10) comprises:

   an input interface for receiving the software code sections to be ranked,
   one or more data repository (7, 8) in which are stored
   a first list of potential modalities that represent attributes of software, each modality being a value of the attribute of software, and
   a second list (B) of numerical weights, each numerical weight being associated to at least one potential modality of the first list and representing a numerical contribution of the at least one modality of the first list to a level of defects function,
   a code characteristic manager component (1) configured to determine the actual modalities of a software code section received by the input interface,
   a utility calculator component (3) configured to perform the step of calculating the level of defects function (F) for the software code section, as a function of the actual modalities of the software code section and of the numerical weights associated to the actual modalities of the software code section, and
   a recommender component (4) configured to perform the step of ranking the software code sections as a function of the level of defects function,
   the device further comprising one or more output interface for transmitting a ranked list of the software code sections.

2. A device in accordance with claim 1, further comprising a modeler component (2) having a data repository in which is stored a plurality of software code sections for modeling, each software code section having an n-tuple of modalities representing attributes of the software code section, the modeler component further comprising
   a modeler calculator component configured to perform the step (21) of applying a design of experiment algorithm to the first list of potential modalities, in order to generate a matrix (A) having a plurality of rows, each row comprising an n-tuple of modalities, wherein each modality of the n-tuple represents a respective attribute of software, wherein a column of the matrix comprises the modalities of a unique attribute of software,
   the modeler component further comprising a score memory component for storing a list of level of defect values(Y), each level of defect value being the result of a quantitative assessment (23) of a software code section for modeling that matches the n-tuple of modalities defined by a rank of the matrix,
   the modeler calculator component being further configured to perform the step (24) of calculating the second list (B) as a function of the list of level of defect values and of the matrix.

3. A device in accordance with claim 2, wherein the calculation of the second list as a function of the list of level of defect values and of the matrix is performed as follows: $B = (\tilde{A}.A)^{-1}. (\tilde{A}. Y)$, wherein B is the second list, A is the matrix, Y is the list of level of defect values and $\tilde{A}$ represents the transpose of the matrix A.

4. A device in accordance with claim 2 or 3, wherein the algorithm used for performing the design of experiment is Box-Behnken plan or AlgDesign R package.

5. A device in accordance with any one of claims 2 to 4, wherein the device further comprises a selection module configured to perform the step of calculating an algorithm suitability, wherein the algorithm suitability is defined as the difference between the level of defects function applied to an n-tuple of modalities and the corresponding level of defect value stored in the score memory component.

6. The device in accordance with any one of claims 2 to 5, wherein the data repository further comprises a set of design of experiment algorithms,

the selection module is further configured to perform the step of selecting by an iterative selection method an algorithm belonging to the set of design of experiment algorithms,

wherein the iterative selection method comprises applying each design of experiment algorithm by the modeler component to the first list of potential modalities for calculating the level of defects function for the software code sections,

the iterative selection method further comprises calculating, by the selection module, the algorithm suitability for each design of experiment algorithm,

the iterative selection method further comprises ranking, by the selection module, the design of experiment algorithms as a function of each algorithm suitability, from the lowest algorithm suitability to the highest algorithm suitability,

the iterative selection method further comprises the selection, in the ranked design of experiment algorithms, of the first ranked algorithm for applying by the modeler calculator component.

7. A device in accordance with any one of claims 2 to 6, wherein the modeler component is further configured to perform the step of optimizing by an iterative method the design of experiment algorithm, by excluding from the calculation of the matrix the potential combination of modalities that do not match the exhaustive combination of modalities of the software code sections for modeling stored in the data repository.

8. A device in accordance with any one of claims 2 to 7, wherein the attributes of software comprise an author attribute characterizing the name of the author of a software code section.

9. A device in accordance with any one of claims 2 to 8, wherein the attributes comprise an attribute selected in the following list: List of authors who contributed to creation or modification, date of modification, frequency of modification, java package, java package tree, most important design pattern used, price paid, number of lines of the software code section, number of different authors having contributed to the software code section creation or modification, number of countries from which the authors who contributed to creation of the software code sections originate, number of countries from which the authors who contributed to modification of the software code sections originate, list of countries from which the authors who contributed to creation of the software code sections originate, list of countries from which the authors who contributed to modification of the software code sections originate, last country from which the authors who contributed to creation of the software code sections originate, last country from which the authors who contributed to modification of the software code sections originate, number of external libraries used to create and/or modify the software code sections, number of include and/or import used to create and/or modify the software code sections, number of copy/paste performed from other software code sections to create and/or modify the software code sections, size of copy/paste performed from other software code sections to create and/or modify the software code sections, number of code review performed on the software code sections, frequency of code review performed on the software code sections.

10. A device in accordance with any one of claims 2 to 9, wherein the utility calculator component is further configured to perform a selection of a software code section as a function of the rank of the software code section.

11. A device in accordance with any one of claims 2 to 10, wherein the second list comprises a numerical weight associated to a plurality of modalities of the first list and representing a numerical contribution of an interaction between the plurality of modalities to the level of defects function.

12. A device in accordance with any one of claims 2 to 11, wherein the one or more data repository of the device further stores a list of potential reviewers, wherein the utility calculator component is further configured for ranking the list of potential reviewers for a selected software code section,

the modeler component being configured for,

for each reviewer of the list of potential reviewers,

selecting, from the score memory component and the one or more data repository, a subset of the n-tuples of modalities of the software code sections stored in the data repository for which the matching level of defect value is the result of a quantitative assessment attributed by the reviewer, each modality of the n-tuple of modalities being stored in the first list,

applying, by the modeler calculator component, a design of experiment algorithm to the subset of the n-tuples of modalities, in order to generate a reviewer matrix having a plurality of rows, each row comprising an n-tuple of modalities of the subset,

calculating, by the modeler calculator component, a reviewer second list of numerical weights as a function of the matching level of defect values and of the reviewer matrix,

the utility calculator component being further configured to perform the calculation of a reviewer's defect detection capability function, as a function of the actual modalities of the selected software code section and of the numerical weights of the reviewer second list that are associated to the actual modalities of the selected software code section, wherein the reviewer's defect detection capability function represents the reviewer detection capability of defects associated to the selected software code section,

the recommender component being further configured to perform the steps of:

- ranking, for the selected software code section, the reviewers of the list of potential reviewers as a function of the reviewer's defect detection capability function,
- transmitting, via an output interface, the ranked list of potential reviewers associated to the selected software code section.

13. A device in accordance with claim 12, wherein the device further comprises a selection interface for selecting the software code section to review.

14. A computer-implemented method for ranking software code sections to be reviewed for errors, wherein a first list of potential modalities represent attributes of software, each modality being a value of the attribute of software, and a second list of numerical weights represent a numerical contribution of the at least one modality of the first list to a level of defects function, each numerical weight being associated to at least one potential modality of the first list, the method comprising the steps of:

- receiving the software code sections to be ranked,
- determining the actual modalities of a software code section received,
- calculating the level of defects function for the software code section, as a function of the actual modalities of the software code section and of the numerical weights associated to the actual modalities of the software code section,
- ranking the software code sections as a function of the level of defects function, and
- transmitting a ranked list of the software code sections.

15. A method in accordance with claim 14, wherein each software code section of a plurality of software code sections for modeling has an n-tuple of modalities representing attributes of the software code section, the method further comprising:

applying a design of experiment algorithm to the first list of potential modalities, in order to generate a matrix (A) having a plurality of rows, each row comprising an n-tuple of modalities, wherein each modality of the n-tuple represents a respective attribute of software, wherein a column of the matrix comprises the modalities of a unique attribute of software,

calculating the second list (B) as a function of a list of level of defect values (Y) and of the matrix, wherein each level of defect value of the list of level of defect values(Y) is the result of a quantitative assessment (23) of a software code section for modeling that matches the n-tuple of modalities defined by a rank of the matrix, the method further comprising the ranking of a list of potential reviewers for a selected software code section, by:

- selecting a subset of the n-tuples of modalities of the software code sections for which the matching level of defect value is the result of a quantitative assessment attributed by the reviewer, each modality of the n-tuple of modalities being stored in the first list,
- applying a design of experiment algorithm to the subset of the n-tuples of modalities, in order to generate a reviewer matrix having a plurality of rows, each row comprising an n-tuple of modalities of the subset,
- calculating, by the modeler calculator component, a reviewer second list of numerical weights as a function of the matching level of defect values and of the reviewer matrix,
- performing the calculation of a reviewer's defect detection capability function, as a function of the actual modalities of the selected software code section and of the numerical weights of the reviewer second list that are associated to the actual modalities of the selected software code section, wherein the reviewer's defect detection capability function represents the reviewer detection capability of defects associated to the selected software code section,

- ranking, for the selected software code section, the reviewers of the list of potential reviewers as a function of the reviewer's defect detection capability function,
- transmitting the ranked list of potential reviewers associated to the selected software code section.

**Amended claims in accordance with Rule 137(2) EPC.**

1. A device (10) for ranking software code sections to be reviewed for errors, wherein the device (10) comprises:

an input interface for receiving the software code sections to be ranked,
one or more data repository (7, 8) in which is stored
a first list of potential modalities that represent attributes of software, each modality being a value of the attribute of software, and
a code characteristic manager component (1) configured to determine the actual modalities of a software code section received by the input interface,
a utility calculator component (3) configured to perform the step of calculating a level of defects function (F) for the software code section, as a function of the actual modalities of the software code section, and
a recommender component (4) configured to perform the step of ranking the software code sections as a function of the level of defects function,
the device further comprising one or more output interface for transmitting a ranked list of the software code sections,
**characterized in that**
a second list (B) of numerical weights is further stored in the one or more data repository (7, 8), each numerical weight being associated to at least one potential modality of the first list and representing a numerical contribution of the at least one modality of the first list to a level of defects function, and
the utility calculator component (3) is configured to perform the step of calculating a level of defects function (F) for the software code section as a further function of the numerical weights associated to the actual modalities of the software code section, and
the attributes of software comprise an author attribute characterizing the name of the author of a software code section, wherein the level of defects function is a sum of contributions, wherein the contributions comprise a contribution for each of the potential modalities of the first list, wherein the contribution for a modality is equal to the associated numerical weight multiplied by Boolean value representing an identity between the potential modality and the actual modalities of the software code section.

2. A device in accordance with claim 1, further comprising a modeler component (2) having a data repository in which is stored a plurality of software code sections for modeling, each software code section having an n-tuple of modalities representing attributes of the software code section, the modeler component further comprising
a modeler calculator component configured to perform the step (21) of applying a design of experiment algorithm to the first list of potential modalities, in order to generate a matrix (A) having a plurality of rows, each row comprising an n-tuple of modalities, wherein each modality of the n-tuple represents a respective attribute of software, wherein a column of the matrix comprises the modalities of a unique attribute of software, wherein the number of rows is lower than an exhaustive number of n-tuples of modalities,
the modeler component further comprising a score memory component for storing a list of level of defect values(Y), each level of defect value being the result of a quantitative assessment (23) of a software code section for modeling that matches the n-tuple of modalities defined by a rank of the matrix,
the modeler calculator component being further configured to perform the step (24) of calculating the second list (B) as a function of the list of level of defect values and of the matrix.

3. A device in accordance with claim 2, wherein the calculation of the second list as a function of the list of level of defect values and of the matrix is performed as follows: $\vec{B} = (\tilde{A}.A)^{-1}. (\tilde{A}. \vec{Y})$, wherein B is the second list, A is the matrix, Y is the list of level of defect values and $\tilde{A}$ represents the transpose of the matrix A.

4. A device in accordance with claim 2 or 3, wherein the algorithm used for performing the design of experiment is Box-Behnken plan or AlgDesign R package.

5. A device in accordance with any one of claims 2 to 4, wherein the device further comprises a selection module configured to perform the step of calculating an algorithm suitability, wherein the algorithm suitability is defined as the difference between the level of defects function applied to an n-tuple of modalities and the corresponding level of defect value stored in the score memory component.

6. The device in accordance with any one of claims 2 to 5, wherein the data repository further comprises a set of design of experiment algorithms,

the selection module is further configured to perform the step of selecting by an iterative selection method an algorithm belonging to the set of design of experiment algorithms,

wherein the iterative selection method comprises applying each design of experiment algorithm by the modeler component to the first list of potential modalities for calculating the level of defects function for the software code sections,

the iterative selection method further comprises calculating, by the selection module, the algorithm suitability for each design of experiment algorithm,

the iterative selection method further comprises ranking, by the selection module, the design of experiment algorithms as a function of each algorithm suitability, from the lowest algorithm suitability to the highest algorithm suitability,

the iterative selection method further comprises the selection, in the ranked design of experiment algorithms, of the first ranked algorithm for applying by the modeler calculator component.

7. A device in accordance with any one of claims 2 to 6, wherein the modeler component is further configured to perform the step of optimizing by an iterative method the design of experiment algorithm, by excluding from the calculation of the matrix the potential combination of modalities that do not match the exhaustive combination of modalities of the software code sections for modeling stored in the data repository.

8. A device in accordance with any one of claims 2 to 7, wherein the attributes comprise an attribute selected in the following list: List of authors who contributed to creation or modification, date of modification, frequency of modification, java package, java package tree, most important design pattern used, price paid, number of lines of the software code section, number of different authors having contributed to the software code section creation or modification, number of countries from which the authors who contributed to creation of the software code sections originate, number of countries from which the authors who contributed to modification of the software code sections originate, list of countries from which the authors who contributed to creation of the software code sections originate, list of countries from which the authors who contributed to modification of the software code sections originate, last country from which the authors who contributed to creation of the software code sections originate, last country from which the authors who contributed to modification of the software code sections originate, number of external libraries used to create and/or modify the software code sections, number of include and/or import used to create and/or modify the software code sections, number of copy/paste performed from other software code sections to create and/or modify the software code sections, size of copy/paste performed from other software code sections to create and/or modify the software code sections, number of code review performed on the software code sections, frequency of code review performed on the software code sections.

9. A device in accordance with any one of claims 2 to 8, wherein the utility calculator component is further configured to perform a selection of a software code section as a function of the rank of the software code section.

10. A device in accordance with any one of claims 2 to 9, wherein the second list comprises a numerical weight associated to a plurality of modalities of the first list and representing a numerical contribution of an interaction between the plurality of modalities to the level of defects function.

11. A device in accordance with any one of claims 2 to 10, wherein the one or more data repository of the device further stores a list of potential reviewers, wherein the utility calculator component is further configured for ranking the list of potential reviewers for a selected software code section,

the modeler component being configured for,

for each reviewer of the list of potential reviewers,

selecting, from the score memory component and the one or more data repository, a subset of the n-tuples of modalities of the software code sections stored in the data repository for which the matching level of defect value is the result of a quantitative assessment attributed by the reviewer, each modality of the n-tuple of modalities being stored in the first list, applying, by the modeler calculator component, a design of experiment algorithm to the subset of the n-tuples of modalities, in order to generate a reviewer matrix having a plurality of rows, each row comprising an n-tuple of modalities of the subset, calculating, by the modeler calculator component, a reviewer second list of numerical weights as a function of the matching level of defect values and of the reviewer matrix, the utility calculator component being further configured to perform the calculation of a reviewer's defect detection capability function, as a function of the actual modalities of the selected software code section and of the numerical weights of the reviewer second list that are associated to the actual modalities of the selected software code section, wherein the reviewer's defect detection capability function represents the reviewer detection capability of defects associated to the selected software code section,

the recommender component being further configured to perform the steps of:

- ranking, for the selected software code section, the reviewers of the list of potential reviewers as a function of the reviewer's defect detection capability function,
- transmitting, via an output interface, the ranked list of potential reviewers associated to the selected software code section.

**12.** A device in accordance with claim 11, wherein the device further comprises a selection interface for selecting the software code section to review.

**13.** A computer-implemented method for ranking software code sections to be reviewed for errors, wherein a first list of potential modalities represent attributes of software, each modality being a value of the attribute of software, and the method comprising the steps of:

- receiving the software code sections to be ranked,
- determining the actual modalities of a software code section received,
- calculating the level of defects function for the software code section, as a function of the actual modalities of the software code section,
- ranking the software code sections as a function of the level of defects function, and
- transmitting a ranked list of the software code sections,

**characterized in that**
a second list of numerical weights represent a numerical contribution of the at least one modality of the first list to a level of defects function, each numerical weight being associated to at least one potential modality of the first list, wherein the step of calculating the level of defects function for the software code section is further performed as a function of the numerical weights associated to the actual modalities of the software code section,
wherein the attributes of software comprise an author attribute characterizing the name of the author of a software code section, wherein the level of defects function is a sum of contributions, wherein the contributions comprise a contribution for each of the potential modalities of the first list, wherein the contribution for a modality is equal to the associated numerical weight multiplied by Boolean value representing an identity between the potential modality and the actual modalities of the software code section.

**14.** A method in accordance with claim 13, wherein each software code section of a plurality of software code sections for modeling has an n-tuple of modalities representing attributes of the software code section, the method further comprising:

applying a design of experiment algorithm to the first list of potential modalities, in order to generate a matrix (A) having a plurality of rows, each row comprising an n-tuple of modalities, wherein each modality of the n-tuple represents a respective attribute of software, wherein a column of the matrix comprises the modalities of a unique attribute of software,
calculating the second list (B) as a function of a list of level of defect values (Y) and of the matrix, wherein each level of defect value of the list of level of defect values(Y) is the result of a quantitative assessment (23) of a software code section for modeling that matches the n-tuple of modalities defined by a rank of the matrix, the method further comprising the ranking of a list of potential reviewers for a selected software code section, by:

- selecting a subset of the n-tuples of modalities of the software code sections for which the matching level of defect value is the result of a quantitative assessment attributed by the reviewer, each modality of the n-tuple of modalities being stored in the first list,
- applying a design of experiment algorithm to the subset of the n-tuples of modalities, in order to generate a reviewer matrix having a plurality of rows, each row comprising an n-tuple of modalities of the subset,
- calculating, by the modeler calculator component, a reviewer second list of numerical weights as a function of the matching level of defect values and of the reviewer matrix,
- performing the calculation of a reviewer's defect detection capability function, as a function of the actual modalities of the selected software code section and of the numerical weights of the reviewer second list that are associated to the actual modalities of the selected software code section, wherein the reviewer's defect detection capability function represents the reviewer detection capability of defects associated to the selected software code section,
- ranking, for the selected software code section, the reviewers of the list of potential reviewers as a function of the reviewer's defect detection capability function,
- transmitting the ranked list of potential reviewers associated to the selected software code section.

$$A = \begin{bmatrix} 1 & \cdots & 1 \\ \vdots & \searrow & \vdots \\ 3 & \cdots & 2 \end{bmatrix}$$ ~21

| Inspection | Classes to be inspected |
|------------|-------------------------|
| 1 | Org.unknown.views.MyView |
| ... | |
| N | Org.unknown.models.MySuperModel |

~22

$$Y = \begin{bmatrix} 0 \\ \cdots \\ 6 \end{bmatrix}$$ ~23

$$\vec{B} = \begin{bmatrix} 1.3 \\ 6.4 \\ 7.3 \\ \vdots \\ 1.2 \end{bmatrix}$$ ~24

F ~25

FIG.2

FIG. 3

Europäisches
Patentamt

European
Patent Office

Office européen
des brevets

## EUROPEAN SEARCH REPORT

Application Number

EP 14 30 6238

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/031423 A1 (BARROW FLINT [US] ET AL) 31 January 2013 (2013-01-31) <br> * figures 1-5 * <br> * paragraph [0007] - paragraph [0010] * <br> * paragraph [0021] - paragraph [0023] * <br> * paragraph [0034] - paragraph [0043] * <br> * claims 1-15 * <br> ----- | 1-15 | INV. <br> G06F9/44 <br> G06F11/36 <br> G06Q10/06 |
| A | US 2008/059395 A1 (FLINN STEVEN D [US] ET AL) 6 March 2008 (2008-03-06) <br> * the whole document * <br> ----- | 1-15 | |

TECHNICAL FIELDS
SEARCHED     (IPC)

G06Q
G06F

The present search report has been drawn up for all claims

| Place of search | Date of completion of the search | Examiner |
|---|---|---|
| Munich | 15 January 2015 | Rackl, Günther |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 14 30 6238

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2015

| Patent document cited in search report | Publication date | Patent family member(s) | Publication date |
|---|---|---|---|
| US 2013031423 A1 | 31-01-2013 | EP 2737406 A1<br>US 2013031423 A1<br>WO 2013016054 A1 | 04-06-2014<br>31-01-2013<br>31-01-2013 |
| US 2008059395 A1 | 06-03-2008 | US 2008059395 A1<br>US 2011137849 A1 | 06-03-2008<br>09-06-2011 |

EPO FORM P0459

For more details about this annex : see Official Journal of the European Patent Office, No. 12/82